# EUROPEAN PATENT APPLICATION

(11) **EP 4 175 029 A1**
(43) Date of publication of application: **03.05.2023**
(21) Application number: 21213527.1
(22) Date of filing: 09.12.2021
(51) Int. Cl.: H01M 50/15, H01M 50/148, H01M 50/169, H01M 50/176, H01M 50/188, H01M 50/30, H01M 50/548, H01M 50/636, H01M 50/557

(54) **SIDE STRUCTURE OF BATTERY PACK FOR AUTOMOTIVE SECONDARY BATTERY**

(30) Priority: 28.10.2021 KR 20210145410
(71) Applicant: SP Systems Co., Ltd., Geyonsangnam-do 50591 (KR)
(72) Inventor: LEE, Sung Hwan, 18442 Hwaseong-si, Gyeonggi-do (KR)
(74) Representative: Hoefer & Partner Patentanwälte mbB

(57) **Abstract**

Provided is a side structure of a battery pack for an automotive secondary battery coupled to a left side and a right side of a casing provided on an outer side of the battery pack including a plurality of battery cells, the side structure of a battery pack for an automotive secondary battery including: an anode part cap assembly provided with an anode protrudingly formed on one surface thereof and fixedly coupled to a left side of the casing; and a cathode part cap assembly provided with a cathode protrudingly formed on one surface thereof and fixedly coupled to a right side of the casing, wherein the anode part cap assembly comprises: a terminal plate; a conductor; and a first cap plate, wherein the first cap plate is provided with a lower seating part.

## Description

### CROSS REFERENCE TO RELATED APPLICATION

The present application claims priority to Korean Patent Application No. 10-2021-0145410 filed on October 28, 2021, which is incorporated herein by reference in its entirety.

### BACKGROUND

### 1. Technical Field

The present disclosure relates to a side structure of a battery pack for an automotive secondary battery. More particularly, the present disclosure relates to a side structure of a battery pack for an automotive secondary battery that is capable of reducing a loss area caused by gaps between battery cells by reducing the number of battery cells in left and right directions from three to one, in order to increase the efficiency of energy generated from battery cells included in many secondary batteries for automobiles.

### 2. Description of the Related Art

Electrification and cordless are key to a future industrial change, and an era in which all things move using lithium polymer batteries is beginning. Specifically, the application areas of secondary batteries are continuously expanding, such as wireless home appliances, robots, drones, energy storage devices, electric vehicles, electric ships, and the like.

Secondary batteries are a key means of sustainable growth that may meet eco-friendly global trends, and the secondary battery market is expected to grow rapidly due to increased demand from around the world. According to IHS Markit, secondary batteries are expected to grow into a larger market than memory semiconductors by 2025.

In addition, according to SNE Research, the global secondary battery market is expected to grow more than 8 times over the next 10 years from $ 46.1 billion in 2020 to $ 351.7 billion in 2030, thanks to the expansion of electric vehicle supply.

In addition, the proportion of secondary batteries for electric vehicles in the total secondary battery market is expected to increase from 65.9% in 2020 to 86.6% in 2030. In particular, secondary batteries for electric vehicles are expected to grow more than ten times over the next 10 years, from $30.4 billion in 2020 to $304.7 billion in 2030.

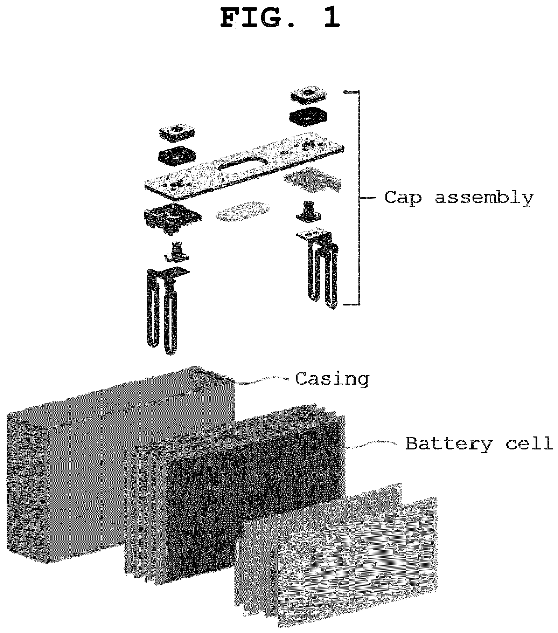

FIG. 1 is a block diagram of a conventional cap assembly, a casing, and a battery cell.

With reference to FIG. 1, in a conventional secondary battery for an electric vehicle, the interval between battery cells is formed to be spaced apart in the left and right directions, and thus there is a problem in that a loss region occurs in the interval between the battery cells, so the efficiency of energy generated from the battery cells is significantly lowered.

With reference to FIG. 1, in a conventional secondary battery for an electric vehicle, positive and negative poles are respectively formed on the left and right sides of an upper portion of the cap assembly, and battery cells are disposed under the cap assembly. In addition, since the battery cell provided with the cap assembly is disposed under the driver's feet, there is a problem in that the size of the space occupied by the battery pack increases.

The foregoing is intended merely to aid in the understanding of the background of the present disclosure, and is not intended to mean that the present disclosure falls within the purview of the related art that is already known to those skilled in the art.

### Documents of Related Art

### [Patent Document]

(Patent Document 1) KR 10-1212552

### SUMMARY

Accordingly, the present disclosure has been made keeping in mind the above problems occurring in the related art, and an objective of the present disclosure is to provide a side structure of a battery pack for an automotive secondary battery that is capable of reducing a loss area generated due to gaps between battery cells by reducing the number of battery cells in left and right directions from three to one, in order to increase the efficiency of energy generated from a plurality of battery cells included in secondary batteries for automobiles.

In addition, another objective of the present disclosure is to provide the side structure of a battery pack for an automotive secondary battery, in which an anode part cap assembly, in which an anode is protrudingly formed, and a cathode part cap assembly, in which a cathode is formed, are disposed on left and right side surfaces of a battery pack casing, respectively, rather than on an upper part of the battery pack casing. As a result, the present disclosure is capable of reducing a height of a space occupied by a battery pack, thereby being efficiently reflected in a structural design of an automobile and of stabilizing a structure of the battery cell by increasing a capacity of the battery.

In order to achieve the above objectives, according to one aspect of the present disclosure, there may be provided a side structure 10 of a battery pack for an automotive secondary battery coupled to a left side and a right side of a casing 5 provided on an outer side of the battery pack including a plurality of battery cells, the side structure 10 of a battery pack for an automotive secondary battery, including: an anode part cap assembly 20 provided with an anode protrudingly formed on one surface thereof and fixedly coupled to a left side of the casing 5; and a cathode part cap assembly 30 provided with a cathode protrudingly formed on one surface thereof and fixedly coupled to a right side of the casing 5, wherein the anode part cap assembly 20 may include: a terminal plate 21 provided with upper coupling holes 21a recessed to be formed on opposite sides of a lower surface thereof, respectively; a conductor 22 provided under the terminal plate 21 and provided with an upper seating part 22a, on which a lower portion of the terminal plate 21 may be seated, and which may be recessed to be formed on a center of an upper surface thereof; a first cap plate 23 coupled by welding to the casing 5, thereby protecting an inner side of the casing 5; and an insulator 24 provided under the first cap plate 23 and provided with a mounting portion 24b recessed to be formed under a lower surface thereof, wherein the first cap plate 23 may be provided with a lower portion seating part 23a, on which a lower portion of the conductor 22 may be seated, and which may be recessed to be formed on a center of an upper surface thereof.

In addition, the upper seating part 22a may be provided with upper protrusion parts 22b fixedly coupled to the upper coupling holes 21a and protrudingly formed on opposite sides of an upper surface thereof, respectively, the conductor 22 may be provided with lower protrusion parts 22c protrudingly formed on opposite sides of a lower surface thereof, respectively, the lower seating part 23a may be provided with lower coupling holes 23b, to which the lower protrusion parts 22c may be fixedly coupled, and which may be recessed to be formed on opposite sides of an upper surface thereof, respectively, the first cap plate 23 is provided with upper protrusion parts 23c protrudingly formed on opposite sides of a lower surface thereof, respectively, and the insulator 24 is provided with insertion holes 24a recessed to be formed on opposite sides of an upper surface thereof, respectively, corresponding to the upper protrusion parts 23c.

In addition, the terminal plate 21 may be provided with a first through hole 21b formed through on a center of an upper surface thereof, the upper seating part 22a may be provided with a second through hole 22d having a larger diameter than the first through hole 21b and formed through on a center of the upper surface thereof, the first cap plate 23 may be provided with a third through hole 23d having the same diameter as the second through hole 22d formed through on a center of the upper surface thereof, the insulator 24 may be provided with a fourth through hole 24c having the same diameter as the third through hole 23d formed through on a center of the upper surface thereof, and the anode part cap assembly 20 may include: a seal gasket 25 closely coupled to the second through hole 22d, the third through hole 23d, and the fourth through hole 24c, and provided with an upper through hole 25a formed through on a center of an upper surface thereof; a rivet terminal 26 having an upper portion coupled to the first through hole 21b by caulking and welding, thereby being connected in series with the terminal plate 21; and an anode current collector 27 coupled to a lower portion of the rivet terminal 26 by caulking and welding, thereby being connected in series with the rivet terminal 26, wherein the rivet terminal 26 may have an upper portion inserted passing through the first through hole 21b and the upper through hole 25a, and the anode current collector 27 may be seated under the mounting portion 24b.

In addition, the seal gasket 25 may be provided with a base portion 25b protrudingly formed in a circumferential direction at a lower portion thereof, the rivet terminal 26 may include: an upper body portion 26a protrudingly formed in an opposite direction of gravity, thereby being fixedly coupled to the first through hole 21b and the upper through hole 25a; an edge portion 26b provided at a lower portion of the upper body portion 26a and protrudingly formed in a circumferential direction; and a lower body portion 26c provided under the edge portion 26b and protrudingly formed in a direction of gravity, wherein the anode collector 27 may be provided with a lower through hole 27a, to which the lower body portion 26c may be fixedly coupled, and which may be formed through on a center of an upper surface thereof.

In addition, the first cap plate 23 may be provided with a fixing hole 23e formed through on one side of the upper surface thereof, an upper insertion hole 23f formed through on an opposite side of the upper surface thereof, and a lower insertion hole 23g configured to inject an electrolyte into a plurality of battery cells accommodated at the inner side of the casing 5, and the anode part cap assembly 20 may further include: a vent 28 fixedly coupled to the fixing hole 23e; a seal ball 29 fixedly coupled to the lower insertion hole 23g, thereby sealing the lower insertion hole 23g so that the electrolyte may not flow out to an outside through the lower insertion hole 23g; and a seal ball cover 29a fixedly coupled to the upper insertion hole 23f so that the seal ball 29 may not be separated to an outer side.

In addition, the vent 28 may be provided with a plurality of through holes 28a formed through on an upper surface thereof so that a gas inside the casing 5 may be able to be discharged.

As described above, a side structure of a battery pack for an automotive secondary battery according to the present disclosure can reduce the number of battery cells in left and right directions in the battery pack from three to one, thereby reducing a loss area generated due to gaps between battery cells. Accordingly, there is an effect that can dramatically increase the efficiency of energy generated from the battery cell.

In addition, the side structure of a battery pack for an automotive secondary battery according to the present disclosure disposes an anode part cap assembly, in which an anode is protrudingly formed, and a cathode part cap assembly, in which a cathode is formed, on left and right side surfaces of a battery pack casing, respectively, rather than on an upper part of the battery pack casing. As a result, there is an effect in that the present disclosure can reduce a height of a space occupied by a battery pack, thereby being efficiently reflected in a structural design of an automobile.

In addition, the side structure of a battery pack for an automotive secondary battery according to the present disclosure can increasing a capacity of the battery, thereby providing an effect of stabilizing the structure of the battery cell.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a block diagram of a conventional cap assembly, a casing, and a battery cell;
FIG. 2 is a layout view of a side structure of a battery pack for a secondary battery for a vehicle according to the present disclosure;
FIG. 3 is a block diagram of the side structure of a battery pack for a secondary battery for a vehicle shown in FIG. 2;
FIG. 4 is an assembly view of an anode part cap assembly;
FIG. 5 is an exploded view of the anode part cap assembly shown in FIG. 4;
FIG. 6 is an exploded view of a terminal plate, a conductor, a first cap plate, and an insulator;
FIG. 7 is an exploded view of a seal gasket, a rivet terminal, and an anode current collector;
FIG. 8 is an exploded view of a cap plate, a seal ball, and a seal ball cover;
FIG. 9 is an assembly view of a cathode part cap assembly; and
FIG. 10 is an exploded view of the cathode part cap assembly shown in FIG. 9.

### DETAILED DESCRIPTION

Hereinafter, an embodiment of the present disclosure will be described with reference to the accompanying drawings in order to describe in detail enough that a person of ordinary skill in the art to which the present disclosure pertains may easily implement the technical idea of the present disclosure.

However, the following examples are merely examples to help the understanding of the present disclosure, thereby not reducing or limiting the scope of the present disclosure. In addition, the present disclosure may be embodied in several different forms and is not limited to the embodiments described herein.

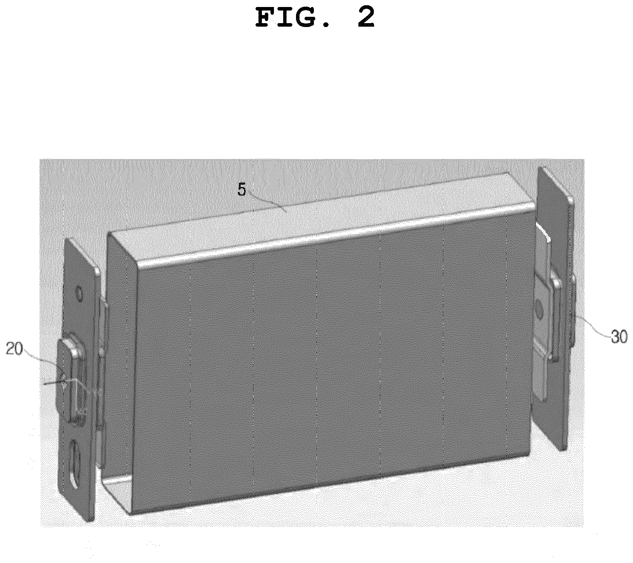

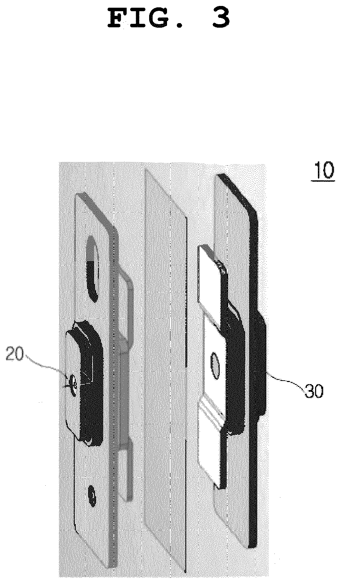

FIG. 2 is a layout view of a side structure 10 of a battery pack for a secondary battery for a vehicle according to the present disclosure, and FIG. 3 is a block diagram of a side structure of a battery pack for a secondary battery for a vehicle shown in FIG. 2.

With reference to FIGS. 2 and 3, the side structure 10 of a battery pack for a secondary battery for a vehicle according to the present disclosure is coupled to left and right sides of a battery pack casing 5 including a plurality of battery cells.

The side structure 10 of a battery pack for a secondary battery for a vehicle according to the present disclosure includes an anode part cap assembly 20 and a cathode part cap assembly 30.

First, the anode part cap assembly 20 is provided with an anode protrudingly formed on one surface thereof and fixedly coupled to a left side of the battery pack casing 5.

In addition, the cathode part cap assembly 30 is provided with a cathode protrudingly formed on one surface thereof and fixedly coupled to a right side of the battery pack casing 5.

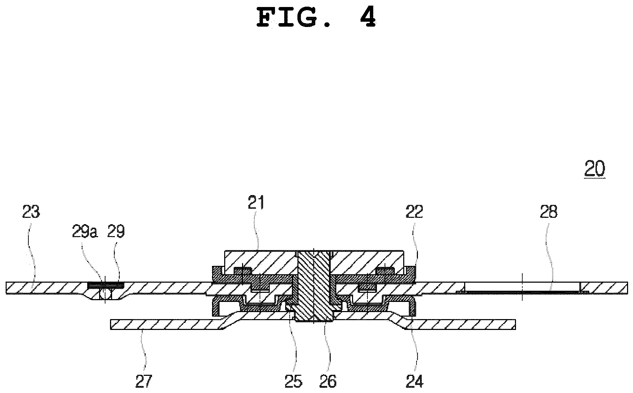

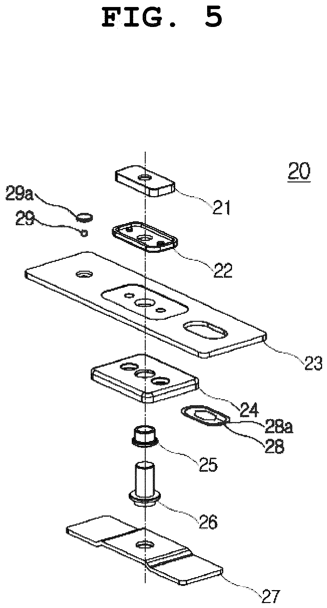

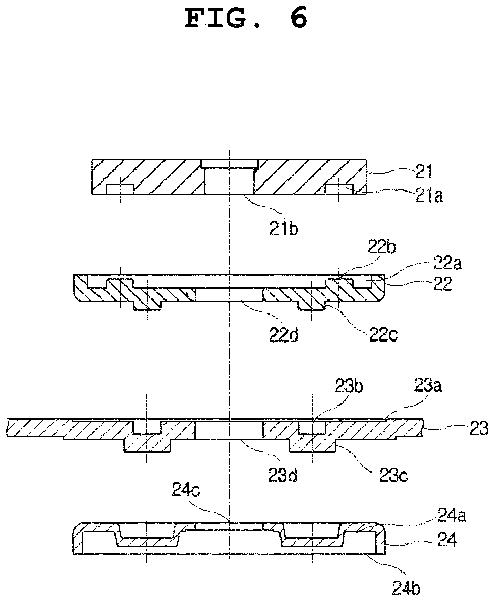

FIG. 4 is an assembly view of an anode part cap assembly 20, FIG. 5 is an exploded view of the anode part cap assembly 20 shown in FIG. 4, and FIG. 6 is an exploded view of a terminal plate 21, a conductor 22, a first cap plate 23, and an insulator 24.

With reference to FIGS. 4 to 6, the anode part cap assembly 20 includes the terminal plate 21, the conductor 22, the first cap plate 23, and the insulator 24.

First, the terminal plate 21 provided with upper coupling holes 21a recessed to be formed on opposite sides of a lower surface thereof, respectively.

At this time, the terminal plate 21 is formed in a shape of a rectangular parallelepiped having a predetermined height. In addition, the terminal plate 21 may be made of a material having high electrical conductivity.

In addition, the conductor 22 is provided under the terminal plate 21 and provided with an upper seating part 22a, on which a lower portion of the terminal plate 21 is seated, and which is recessed to be formed on a center of an upper surface thereof.

At this time, the conductor 22 is formed in a shape of a rectangular parallelepiped having a predetermined height. In addition, the conductor 22 may be made of a material having no electrical conductivity.

In addition, the upper seating part 22a is formed in a shape of a rectangular parallelepiped having a predetermined height, and a width and a length of the upper seating part 22a are formed to be larger than a width and a length of the terminal plate 21 to allow a lower portion of the terminal plate 21 to be inserted thereinto.

In addition, the first cap plate 23 is provided under the conductor 22 and coupled by welding to the casing 5, thereby serving to protect an inside of the casing 5. At this time, the first cap plate 23 is formed to be elongated in left-right directions in a shape of a square plate having a predetermined thickness. In addition, the first cap plate 23 may be made of an aluminum material.

In addition, the first cap plate 23 is provided with a lower seating part 23a, on which a lower portion of the conductor 22 is seated, and which is recessed to be formed on a center of an upper surface thereof. At this time, the lower seating part 23a is formed in a rectangular parallelepiped shape having a predetermined height, and a width and a length of the lower seating part 23a are formed to be larger than a width and a length of the conductor 22 to allow a lower portion of the conductor 22 to be inserted thereinto.

In addition, the insulator 24 is provided at a lower surface of the first cap plate 23 and provided with a mounting portion 24b recessed to be formed at a lower surface of the insulator 24.

At this time, the insulator 24 is formed in a rectangular shape having a predetermined height. In addition, the insulator 24 may be made of a plastic material.

Meanwhile, the upper seating part 22a is provided with upper protrusion parts 22b fixedly coupled to the upper coupling holes 21a of the terminal plate 21 and protrudingly formed on opposite sides of an upper surface thereof, respectively,

In addition, the conductor 22 is provided with lower protrusion parts 22c protrudingly formed on opposite sides of a lower surface thereof, respectively,

In addition, the lower seating part 23a is provided with lower coupling holes 23b, to which the lower protrusion parts 22c are fixedly coupled, and which are recessed to be formed on opposite sides of an upper surface thereof, respectively.

In addition, the first cap plate 23 is provided with upper protrusion parts 23c protrudingly formed on opposite sides of a lower surface thereof, respectively,

In addition, the insulator 24 is provided with insertion holes 24a recessed to be formed on opposite sides of an upper surface thereof, respectively, corresponding to the upper protrusion parts 23c. At this time, each of the insertion holes 24a is formed in a shape of a cone with a diameter that increases toward a bottom.

With reference to FIG. 6, a first through hole 21b is formed through on a center of the upper surface of the terminal plate 21.

In addition, the upper seating part 22a of the conductor 22 is provided with a second through hole 22d having a larger diameter than the first through hole 21b and formed through on a center of the upper surface thereof.

In addition, the first cap plate 23 is provided with a third through hole 23d having the same diameter as the second through hole 22d formed through on a center of the upper surface thereof.

In addition, the insulator 24 is provided with a fourth through hole 24c having the same diameter as the third through hole 23d formed through on a center of the upper surface thereof.

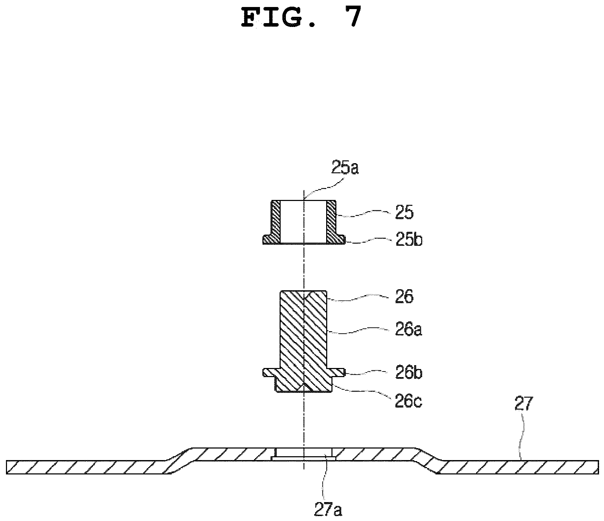

FIG. 7 is an exploded view of a seal gasket 25, a rivet terminal 26, and an anode current collector 27.

With reference to FIGS. 6 and 7, the anode part cap assembly 20 further includes the seal gasket 25, the rivet terminal 26, and the anode current collector 27.

First, the seal gasket 25 is closely coupled to the second through hole 22d of the conductor 22, the third through hole 23d of the first cap plate 23, and the fourth through hole 24c of the insulator 24. At this time, the seal gasket 25 serves to seal current moving inside the rivet terminal 26 not to be leaked to the outside. In addition, the seal gasket 25 may be made of a material not having electrical conductivity.

In addition, the seal gasket 25 is provided with an upper through hole 25a formed through on a center of an upper surface thereof.

In addition, the rivet terminal 26 is coupled to the first through hole 21b of the terminal plate 21 by caulking and welding and is connected in series with the terminal plate 21. At this time, the rivet terminal 26 may be made of a copper material thinly plated with nickel.

Specifically, an upper portion of the rivet terminal 26 is inserted through the upper through hole 25a of the seal gasket 25 and the first through hole 21b of the terminal plate 21, then is coupled to the first through hole 21b of the terminal plate 21 by caulking and welding.

In addition, the anode current collector 27 is coupled to a lower portion of the rivet terminal 26 by caulking and welding, thereby being connected in series with the rivet terminal 26. At this time, the anode current collector 27 is formed to be elongated in the left-right directions in a shape of a rectangular plate having a predetermined thickness. In addition, the anode current collector 27 may be made of a material having high electrical conductivity.

Meanwhile, a current collected by the anode current collector 27 passes through the rivet terminal 26 and moves to the terminal plate 21.

In addition, the seal gasket 25 is provided with a base portion 25b protrudingly formed in a circumferential direction at a lower portion thereof.

In addition, the rivet terminal 26 further includes an upper body portion 26a, an edge portion 26b, and a lower body portion 26c.

First, the upper body portion 26a protrudingly formed in an opposite direction of gravity, thereby being fixedly coupled to the first through hole 21b of the terminal plate 21 and the upper through hole 25a of the seal gasket 25. At this time, the upper body portion 26a is formed in a shape of a cylinder having a predetermined height.

In addition, the edge portion 26b is provided at a lower portion of the upper body portion 26a and protrudingly formed in a circumferential direction.

In addition, the lower body portion 26c is provided under the edge portion 26b and protrudingly formed in a direction of gravity. At this time, the lower body portion 26c is formed in a shape of a cylinder having a predetermined height.

At this time, a diameter of the lower body portion 26c is formed to be larger than a diameter of the upper body portion 26a, and a height of the lower body portion 26c is formed to be smaller than a height of the upper body portion 26a.

In addition, the anode current collector 27 is provided with a lower through hole 27a, to which the lower body portion 26c of the rivet terminal 26 is fixedly coupled, and which is formed through on a center of the upper surface thereof.

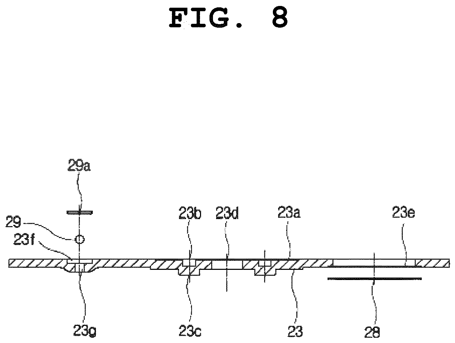

FIG. 8 is an exploded view of the first cap plate 23, a seal ball 29, and a seal ball cover 29a.

With reference to FIG. 8, the first cap plate 23 is provided with a fixing hole 23e formed through on one side of the upper surface thereof.

In addition, the first cap plate 23 is provided with an upper insertion hole 23f formed through on an opposite side of the upper surface thereof. In addition, a lower insertion hole 23g configured to inject an electrolyte into a plurality of battery cells accommodated at the inner side of the casing 5 is formed through under a lower portion of the upper insertion hole 23f. In this case, a diameter of the lower insertion hole 23g is formed to be smaller than a diameter of the upper insertion hole 23f.

In addition, the anode part cap assembly 20 further includes a vent 28, the seal ball 29, and the seal ball cover 29a.

First, the vent 28 is fixedly coupled to the fixing hole 23e of the first cap plate 23. At this time, the vent 28 is formed in a shape of a plate having a predetermined thickness.

In addition, the vent (28) is provided, in order to improve the stability of the battery cell, with a plurality of through holes (28a) formed through on an upper surface thereof so that a gas inside the casing 5 is able to be discharged.

In addition, the seal ball 29 is insertedly coupled to the lower insertion hole 23g of the first cap plate 23, thereby serving to seal the lower insertion hole 23g to prevent the electrolyte from flowing out through the lower insertion hole 23g. At this time, the seal ball 29 is formed in a shape of a sphere having a predetermined diameter.

In addition, the seal ball cover 29a is fixedly coupled to the upper insertion hole 23f of the first cap plate 23 so that the seal ball 29 is not separated to an outer side. At this time, the seal ball cover 29a is formed in a shape of a disk having a predetermined thickness.

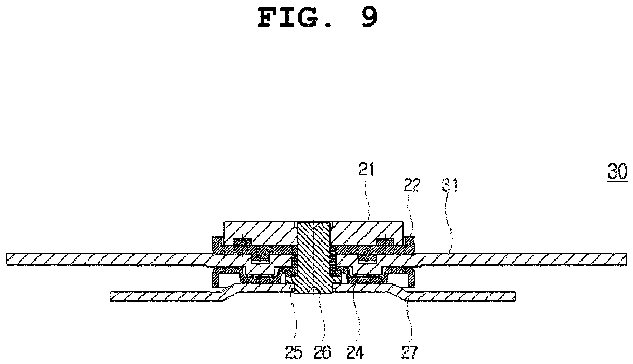

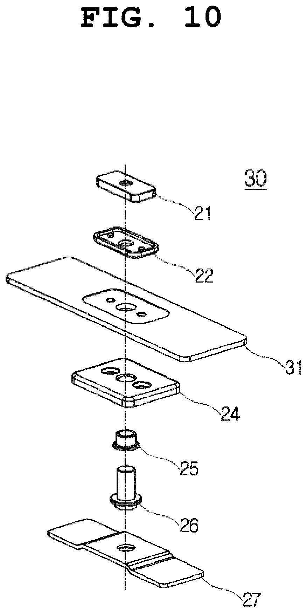

FIG. 9 is an assembly view of a cathode part cap assembly 30, and FIG. 10 is an exploded view of the cathode part cap assembly 30 shown in FIG. 9.

With reference to FIGS. 9 and 10, the cathode part cap assembly 30 includes a second cap plate 31.

Differently from the first cap plate 23, the second cap plate 31 is not formed with the fixing hole 23e, the upper insertion hole 23f, and the lower insertion hole 23g. In other words, the second cap plate 31 is formed in the same shape as the first cap plate 23 from which the fixing hole 23e, the upper insertion hole 23f, and the lower insertion hole 23g are removed.

In addition, the cathode cap assembly 30 does not include the vent 28, the seal ball 29, and the seal ball cover 29a included in the anode part cap assembly 20.

A side structure 10 of a battery pack for an automotive secondary battery according to the present disclosure can reduce the number of battery cells in left and right directions in the battery pack from three to one, thereby reducing a loss area generated due to gaps between battery cells. Accordingly, there is an effect that can dramatically increase the efficiency of energy generated from the battery cell.

In addition, the side structure 10 of a battery pack for an automotive secondary battery according to the present disclosure disposes an anode part cap assembly 20, in which an anode is protrudingly formed, and the cathode part cap assembly 30, in which a cathode is formed, on left and right side surfaces of a battery pack casing 5, respectively, rather than on an upper part of the battery pack casing 5. As a result, there is an effect in that the present disclosure can reduce a height of a space occupied by a battery pack, thereby being efficiently reflected in a structural design of an automobile.

In addition, the side structure 10 of a battery pack for an automotive secondary battery according to the present disclosure can increasing a capacity of the battery, thereby providing an effect of stabilizing the structure of the battery cell.

As described above, the present disclosure has a main technical idea to provide the side structure of a battery pack for an automotive secondary battery, and the embodiment described above with reference to the drawings is only one embodiment. In addition, a true scope of the present disclosure is based on the claims but will also extend to even equivalent embodiments that may exist in various ways.

In conclusion: Provided is aside structure of a battery pack for an automotive secondary battery coupled to a left side and a right side of a casing provided on an outer side of the battery pack including a plurality of battery cells, the side structure of a battery pack for an automotive secondary battery including: an anode part cap assembly provided with an anode protrudingly formed on one surface thereof and fixedly coupled to a left side of the casing; and a cathode part cap assembly provided with a cathode protrudingly formed on one surface thereof and fixedly coupled to a right side of the casing, wherein the anode part cap assembly comprises: a terminal plate; a conductor; and a first cap plate, wherein the first cap plate is provided with a lower seating part.

## Claims

1. A side structure (10) of a battery pack for an automotive secondary battery coupled to a left side and a right side of a casing (5) provided on an outer side of the battery pack including a plurality of battery cells, the side structure (10) of a battery pack for an automotive secondary battery comprising:
an anode part cap assembly (20) provided with an anode protrudingly formed on one surface thereof and fixedly coupled to a left side of the casing (5); and
a cathode part cap assembly (30) provided with a cathode protrudingly formed on one surface thereof and fixedly coupled to a right side of the casing (5),
wherein the anode part cap assembly (20) comprises:
a terminal plate (21) provided with upper coupling holes (21a) recessed to be formed on opposite sides of a lower surface thereof, respectively;
a conductor (22) provided under the terminal plate (21) and provided with an upper seating part (22a), on which a lower portion of the terminal plate (21) is seated, and which is recessed to be formed on a center of an upper surface thereof;
a first cap plate (23) coupled by welding to the casing (5), thereby protecting an inner side of the casing (5); and
an insulator (24) provided under the first cap plate (23) and provided with a mounting portion (24b) recessed to be formed under a lower surface thereof,
wherein the first cap plate (23) is provided with a lower portion seating part (23a), on which a lower portion of the conductor (22) is seated, and which is recessed to be formed on a center of an upper surface thereof.

2. The side structure of a battery pack for an automotive secondary battery of claim 1, wherein the upper seating part (22a) is provided with upper protrusion parts (22b) fixedly coupled to the upper coupling holes (21a) and protrudingly formed on opposite sides of an upper surface thereof, respectively,
wherein the conductor (22) is provided with lower protrusion parts (22c) protrudingly formed on opposite sides of a lower surface thereof, respectively,
wherein the lower seating part (23a) is provided with lower coupling holes (23b), to which the lower protrusion parts (22c) are fixedly coupled, and which are recessed to be formed on opposite sides of an upper surface thereof, respectively,
wherein the first cap plate (23) is provided with upper protrusion parts (23c) protrudingly formed on opposite sides of a lower surface thereof, respectively, and
wherein the insulator (24) is provided with insertion holes (24a) recessed to be formed on opposite sides of an upper surface thereof, respectively, corresponding to the upper protrusion parts (23c) .

3. The side structure of a battery pack for an automotive secondary battery of claim 1, wherein the terminal plate (21) is provided with a first through hole (21b) formed through on a center of an upper surface thereof,
wherein the upper seating part (22a) is provided with a second through hole (22d) having a larger diameter than the first through hole (21b) and formed through on a center of the upper surface thereof,
wherein the first cap plate (23) is provided with a third through hole (23d) having the same diameter as the second through hole (22d) formed through on a center of the upper surface thereof,
wherein the insulator (24) is provided with a fourth through hole (24c) having the same diameter as the third through hole (23d) formed through on a center of the upper surface thereof, and
wherein the anode part cap assembly (20) comprises:
a seal gasket (25) closely coupled to the second through hole (22d), the third through hole (23d), and the fourth through hole (24c), and provided with an upper through hole (25a) formed through on a center of an upper surface thereof;
a rivet terminal (26) having an upper portion coupled to the first through hole (21b) by caulking and welding, thereby being connected in series with the terminal plate (21); and
an anode current collector (27) coupled to a lower portion of the rivet terminal (26) by caulking and welding, thereby being connected in series with the rivet terminal (26),
wherein the rivet terminal (26) has an upper portion inserted passing through the first through hole (21b) and the upper through hole (25a), and
wherein the anode current collector (27) is seated under the mounting portion (24b).

4. The side structure of a battery pack for an automotive secondary battery of claim 3, wherein the seal gasket (25) is provided with a base portion (25b) protrudingly formed in a circumferential direction at a lower portion thereof,
wherein the rivet terminal (26) comprises:
an upper body portion (26a) protrudingly formed in an opposite direction of gravity, thereby being fixedly coupled to the first through hole (21b) and the upper through hole (25a);
an edge portion (26b) provided at a lower portion of the upper body portion (26a) and protrudingly formed in a circumferential direction; and
a lower body portion (26c) provided under the edge portion (26b) and protrudingly formed in a direction of gravity, and
wherein the anode collector (27) is provided with a lower through hole (27a), to which the lower body portion (26c) is fixedly coupled, and which is formed through on a center of an upper surface thereof.

5. The side structure of a battery pack for an automotive secondary battery of claim 1, wherein the first cap plate (23) is provided with a fixing hole (23e) formed through on one side of the upper surface thereof, an upper insertion hole (23f) formed through on an opposite side of the upper surface thereof, and a lower insertion hole (23g) configured to inject an electrolyte into a plurality of battery cells accommodated at the inner side of the casing (5), and
wherein the anode part cap assembly (20) further comprises:
a vent (28) fixedly coupled to the fixing hole (23e);
a seal ball (29) fixedly coupled to the lower insertion hole (23g), thereby sealing the lower insertion hole (23g) so that the electrolyte does not flow out to an outside through the lower insertion hole (23g); and
a seal ball cover (29a) fixedly coupled to the upper insertion hole (23f) so that the seal ball (29) is not separated to an outer side.

6. The side structure of a battery pack for an automotive secondary battery of claim 5, wherein the vent (28) is provided with a plurality of through holes (28a) formed through on an upper surface thereof so that a gas inside the casing (5) is able to be discharged.
